(19) **Europäisches Patentamt European Patent Office Office européen des brevets**

(11) **EP 3 221 760 B1**

(12) **FASCICULE DE BREVET EUROPEEN**

(45) Date de publication et mention de la délivrance du brevet:
**03.04.2019 Bulletin 2019/14**

(21) Numéro de dépôt: **15788170.7**

(22) Date de dépôt: **13.10.2015**

(51) Int Cl.:
*F02D 41/14* (2006.01)   *F02D 41/02* (2006.01)
*F02D 41/10* (2006.01)   *B60W 30/20* (2006.01)

(86) Numéro de dépôt international:
**PCT/FR2015/052751**

(87) Numéro de publication internationale:
**WO 2016/079393 (26.05.2016 Gazette 2016/21)**

(54) **PROCÉDÉ DE COMMANDE DE COUPLE D'UN GROUPE MOTOPROPULSEUR COMPRENANT UN MOTEUR THERMIQUE**

VERFAHREN ZUR STEUERUNG DES DREHMOMENTS EINES ANTRIEBSSTRANGS MIT EINER WÄRMEKRAFTMASCHINE

METHOD FOR CONTROLLING THE TORQUE OF A POWER TRAIN COMPRISING A THERMAL MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2014 FR 1461075**

(43) Date de publication de la demande:
**27.09.2017 Bulletin 2017/39**

(73) Titulaire: **PSA Automobiles SA 78300 Poissy (FR)**

(72) Inventeurs:
- **CHARLES, Juliette**
  **78510 Triel sur Seine (FR)**
- **THOMAS, Mathieu**
  **78280 Guyancourt (FR)**

(56) Documents cités:
**EP-A2- 1 849 980        WO-A1-2014/111430**
**WO-A1-2014/140464      FR-A1- 3 000 993**

**Description**

**Domaine technique de l'invention**

La présente invention se rapporte au domaine de la commande de moteur à combustion interne. L'invention concerne plus particulièrement un procédé de commande de couple d'un groupe motopropulseur comprenant un moteur à combustion interne, un groupe motopropulseur comprenant un calculateur apte à mettre en oeuvre un tel procédé et un véhicule automobile équipé d'un tel groupe motopropulseur.
L'invention s'applique au domaine du contrôle de commande des véhicules équipés d'un Groupe Motopropulseur (GMP) thermique essence ou diesel avec une boîte de vitesses de type manuelle (BVM), automatisée (BVA), pilotée (BVMP) ou à double embrayage (DCT).

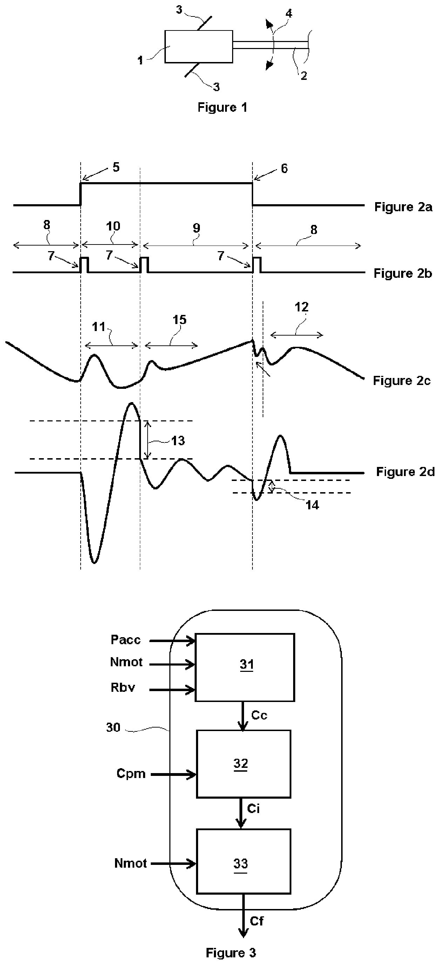

Le document WO 2014/111430 A1 décrit un procédé de détermination d'un couple de correction d'oscillation de régime moteur d'un groupe motopropulseur comprenant un moteur thermique et une transmission. La figure 1 présente schématiquement le groupe motopropulseur équipant un véhicule. Le groupe motopropulseur comporte un moteur thermique 1. Sur la figure 1, le moteur thermique est relié à une transmission 2 comprenant classiquement une boite de vitesse et un dispositif d'embrayage dont seul un élément de liaison avec le moteur 1 est présenté. Le moteur thermique peut être essence ou diesel. La boite de vitesse peut être de type manuelle (BVM), automatisée (BVA), pilotée (BVMP) ou à double embrayage (DCT). La transmission 2 assure le transfert d'un couple généré par le moteur aux roues, non représentées. Le moteur thermique 1 est classiquement posé sur des cales 3 moteur. On appelle jeux moteur le phénomène de torsion 4 des éléments de transmission 2 entre le moment où le moteur thermique 1 se pose sur ses cales 3 et le moment où le moteur thermique entraîne les roues pendant les transitoires d'accélération.

Autrement dit, les jeux moteurs sont le basculement du moteur thermique 1 sur ses cales 3 pendant les transitoires d'accélération. Il y a toujours un basculement du moteur lorsqu'on applique du couple alors qu'il n'y en avait pas, par exemple lors d'une demande d'accélération depuis une situation dite de pied levé, c'est-à-dire sans appui sur la pédale d'accélération, ou lors d'une décélération lorsque l'on lève complètement le pied. Les jeux moteur correspondent ainsi au couple appliqué pour lequel ni le moteur thermique ni la roue ne s'entraînent l'un avec l'autre lors d'une phase transitoire d'accélération.
De tels véhicules sont équipés d'un calculateur permettant d'adapter de manière automatique le point de fonctionnement de chacun des organes du véhicule, en particulier le moteur thermique, afin de respecter la volonté du conducteur en termes de couple demandé et obtenir un agrément de conduite déterminé.

Pour obtenir un agrément de conduite optimal, le calculateur met en oeuvre classiquement deux types de filtrage du couple demandé par le conducteur réalisés à l'aide d'un premier module de filtrage dit préventif du couple moteur et d'un second module de filtrage du couple moteur dit curatif.

Le premier module de filtrage préventif assure un filtrage d'un couple de consigne correspondant à la volonté du conducteur afin de passer les jeux moteur en limitant au maximum les à-coups de la chaîne de traction.

Le second module de filtrage curatif permet d'atténuer les éventuelles oscillations du régime moteur résultant du passage des jeux moteur en accélération et décélération. A cet effet, il génère un couple correctif en opposition de phase avec l'oscillation de régime moteur.

On distingue ainsi plusieurs catégories de transitoires, dont deux types d'accélérations :

- Un premier type d'accélération dite « avec passage des jeux » : le moteur bascule sur ses cales pendant la phase d'accélération lorsque l'on demande du couple alors qu'il n'y en a pas. Cette situation de vie se rencontre par exemple, lors d'une accélération de démarrage suite à un arrêt.

- Un second type d'accélération dite « sans passage des jeux » ou « depuis stabilisé » : il s'agit d'une accélération accompagnée, c'est-à-dire que le conducteur dans une première phase appuie légèrement sur l'accélérateur ce qui permet au moteur de se poser sur ses cales, puis dans une deuxième phase il accélère vraiment. Cette situation de vie se rencontre par exemple, lorsqu'on double une voiture.

On distingue aussi les décélérations, lors par exemple d'un lever de pied du conducteur de la pédale d'accélérateur.

Pour chacune de ces trois phases de vie, le calculateur applique en agrément curatif des paramétrages différents pour atténuer les oscillations du régime moteur.

Les figures 2a à 2d illustre une situation où la catégorie de transitoire en cours varie. La figure 2a montre une séquence avec un poser de pied 5 suivi ultérieurement d'un lever de pied 6 de la pédale d'accélérateur. La figure 2b présente un indicateur montrant la détection 7 au cours de la séquence, d'un changement de catégories de transitoire : décélération 8, accélération « sans traversée des jeux » 9, accélération « avec passage des jeux » 10. Ce changement de catégorie de transitoire entraîne un changement de procédure d'atténuation des oscillations du régime moteur. La figure 2c représente les perturbations de régime moteur que cette demande entraîne, avec des oscillations 11 dues au passage des jeux, des oscillations 12 dues à la décélération.

Dans les procédures d'atténuation des oscillations du régime moteur via l'agrément curatif, lorsque la catégorie de transitoire en cours varie, le couple correctif (figure 2d) varie brutalement du fait de l'application d'un paramétrage différent, ce qui entraîne des sauts de couple, 13, 14 qui sont ressentis par le conducteur dans l'habitacle du véhicule. Ces sauts de couple peuvent d'ailleurs entrainer eux-mêmes des oscillations 15 de régime moteur.

Autrement dit, sur chaque transitoire d'accélération, le conducteur peut potentiellement ressentir des à-coups plus ou moins violents liés aux basculements d'un paramétrage à l'autre de l'agrément curatif. Par ailleurs limiter les sauts de couples requiert une mise au point complexe.

Il existe donc un besoin pour améliorer l'agrément curatif dans le but d'améliorer l'agrément de conduite du conducteur en régime transitoire. Un autre but de l'invention est de limiter les sauts de couples ne nécessitant pas une mise au point complexe.

Pour répondre à ce besoin, il est prévu selon l'invention un procédé de commande de couple d'un groupe motopropulseur comprenant un moteur thermique associé à des moyens de transmissions et un module régulateur d'agrément curatif apte à compenser une oscillation de régime du moteur thermique en appliquant un couple correctif en opposition de phase avec l'oscillation de régime, dans lequel on :

a) Scrute le transitoire de régime du moteur,
b) Classe le transitoire de régime scruté dans une d'au moins deux catégories de transitoire prédéterminées,
c) Applique un couple correctif calibré en fonction de la catégorie de transitoire de régime,
d) Détecte l'occurrence d'un changement de catégorie de transitoire de régime scruté,
et en cas de détection d'un changement de catégorie de transitoire de régime, on :
e) Arrête l'application du couple correctif calibré en fonction de la catégorie de transitoire de régime précédant la détection de changement de catégorie de transitoire,
f) Démarre l'application du couple correctif calibré en fonction de la catégorie de transitoire de régime suivant la détection de changement de catégorie de transitoire, caractérisé en ce que l'on :
g) Applique, sur une durée de transition déterminée, un couple correctif de transition évoluant de la valeur du couple correctif à l'instant de la réalisation de l'étape e) à la valeur du couple correctif à l'instant de la réalisation de l'étape f), la durée de transition correspondant à la différence entre ces deux instants.

L'effet technique est d'avoir un agrément de conduite plus robuste sur tous les transitoires d'accélération, en évitant les sauts de couple lors du changement de transitoire.

De préférence, l'évolution du couple correctif de transition est linéaire.

En variante, les moyens de transmission comportant des rapports démultiplication, la durée de transition est fonction du rapport de démultiplication engagé des moyens de transmission.

De préférence, la durée de transition est supérieure à 0 et inférieure à 100 millisecondes.

De préférence encore, la durée de transition est égale à 30 millisecondes.

En variante, on calcule, pendant la durée de transition déterminée, le couple correctif calibré en fonction de la catégorie de transitoire de régime suivant la détection de changement de catégorie de transitoire, dès la réalisation de l'étape e), sans l'appliquer, et dans lequel, la durée de transition est telle qu'à la fin de celle-ci, le couple correctif de transition) est égal à ce couple correctif calculé.

En variante, le transitoire de régime est classé parmi trois catégories de transitoire prédéterminées.

De préférence, le moteur thermique étant posé sur des cales, les trois catégories de transitoire prédéterminées sont :

- Une décélération,
- Une accélération dite « sans passage de jeux moteur », le moteur ne basculant pas sur ses cales pendant une telle phase d'accélération.
- Une accélération dite « avec passage de jeux moteur », le moteur basculant sur ses cales pendant une telle phase d'accélération.

L'invention a aussi pour objet un groupe motopropulseur un moteur thermique associé à des moyens de transmissions, caractérisé en ce qu'il comprend un calculateur comprenant un module régulateur d'agrément curatif apte à compenser une oscillation de régime du moteur thermique en appliquant un couple correctif en opposition de phase avec l'oscillation de régime, le calculateur comportant de plus des moyens d'acquisition, de traitement et de commande requis à mise en oeuvre d'un procédé selon l'une quelconque des variantes précédemment décrites.

L'invention a encore pour objet un véhicule automobile, caractérisé en ce qu'il comprend un groupe motopropulseur de l'invention.

**Brève description des dessins**

D'autres particularités et avantages apparaîtront à la lecture de la description ci-après d'un mode particulier de réalisation, non limitatif de l'invention, faite en référence aux figures dans lesquelles :

- la figure 1 est une représentation schématique d'un moteur thermique relié à un élément transmission.
- Les figures 2a à 2d sont des chronogrammes illustrant pour un exemple de situation de vie en fonction du temps respectivement le signal de pédale d'accélérateur, un indicateur de détection d'un changement de paramétrage dû à un changement de catégorie de transitoire, l'évolution du régime moteur et l'évolution du couple curatif, selon l'art antérieur.

- La figure 3 une représentation schématique un système de gestion de la commande en couple d'un moteur thermique selon l'invention.
- Les figures 4a à 4d sont des chronogrammes illustrant pour un exemple de situation de vie en fonction du temps respectivement le signal de pédale d'accélérateur, un indicateur de détection d'un changement de paramétrage dû à un changement de catégorie de transitoire, l'évolution du régime moteur et l'évolution du couple curatif, selon l'invention.

## Description détaillée

L'invention s'applique à un groupe motopropulseur d'un véhicule comportant un moteur à combustion interne fonctionnant à l'essence ou au gazole (également communément appelé Diesel) et des moyens de transmission disposés entre ce moteur et les roues du véhicule. Le moteur à combustion interne est posé sur des cales qui le soutiennent. L'invention concerne aussi un véhicule comprenant un tel groupe motopropulseur.

Les moyens de transmission peuvent notamment être une boîte de vitesses de type Boîte de Vitesses Manuelle (BVM), Boîte de Vitesses Automatisée (BVA), Boîte de Vitesses Manuelle Pilotée (BVMP) ou Boîte de Vitesses à Double Embrayage (en anglais « Double Clutch Transmission » ou DCT).

Un calculateur de ce véhicule permet d'adapter de manière automatique le point de fonctionnement de chacun des organes du groupe motopropulseur, en particulier le couple fourni par le moteur à combustion interne, afin de respecter la consigne du conducteur. Concrètement, lorsque le conducteur appuie sur la pédale d'accélérateur, un couple est calculé en fonction du régime moteur et du rapport de boite engagé. Le calculateur comprend les moyens d'acquisition, de traitement par instructions logicielles et de commande requis à mise en oeuvre du procédé de l'invention détaillé ci-après.

La figure 3 présente un système 30 de gestion de la commande en couple d'un moteur à combustion interne intégré dans le calculateur. Ce système 30 comporte un module 31 d'interprétation de la volonté du conducteur, un module 32 d'agrément préventif, ainsi qu'un module 33 d'agrément curatif.

Dans le module 31, on détecte une demande de décélération ou d'accélération du véhicule par le conducteur. Un couple de consigne Cc est alors calculé en fonction de plusieurs données d'entrée permettant d'interpréter la volonté du conducteur. Ces données d'entrées comprennent à titre d'exemple :

- une consigne conducteur Pacc, telle que par exemple la position d'une pédale ou d'un levier d'accélération du véhicule,
- un régime Nmot du moteur thermique,
- un rapport Rbv de démultiplication des moyens de transmission.

L'étape suivante, réalisé au module 32, est de filtrer le couple de consigne Cc calculé au module 31 pour déterminer un couple préventif Cp permettant de traverser les jeux moteur en limitant les à-coups et de respecter un typage prédéfini plus ou moins dynamique du véhicule. Ainsi, en cas demande de décélération, par exemple par un lever de pied du conducteur, le couple préventif Cp calculé permet de réaliser une phase d'adaptation progressive du couple moteur réel au couple de consigne, Cc, à partir du moment de la demande de décélération. Cette phase d'adaptation progressive du couple moteur réel au couple de consigne, Cc, peut se faire selon une trajectoire prédéterminée en fonction du rapport de boite, Rbv et du régime Nmot.

Le couple préventif Cp peut ainsi être déterminé à partir d'une trajectoire mémorisé dans le calculateur sous la forme d'une cartographie qui établit ce couple en fonction de la consigne conducteur, Pacc, du régime moteur Nmot, et du rapport engagé, Rbv.

Le couple préventif Cp est ensuite converti en une consigne de couple indiqué Ci en prenant en compte un couple de pertes du moteur thermique. Le couple de pertes Cpm du moteur thermique est le couple minimum nécessaire pour faire avancer le véhicule. Le couple de pertes Cpm prend généralement en compte les frottements mécaniques internes du moteur ainsi que ceux des accessoires, tels qu'un alternateur, liés au moteur.

Le couple indiqué Ci est égal à la somme du couple préventif Cp et du couple de pertes Cpm du moteur thermique :

$$Ci = Cp + Cpm$$

A l'étape suivante, le module 33 régulateur d'agrément curatif surveille l'évolution du régime moteur, Nmot, et détermine lorsque le régime du moteur oscille, un couple correctif, Ccor, destiné à atténuer les oscillations du régime moteur, l'évolution du couple correctif étant en opposition de phase avec cette oscillation de régime du moteur. La consigne de couple final Cf du moteur est alors égale à la somme du couple indiqué Ci et du couple correctif Ccor :

$$Cf = Ci + Ccor$$

Le couple final, Cf, est ensuite converti en commande des différents organes d'injection (quantité à injecter, pression d'injection...).

Ces différents modules sont par exemple intégrés au calculateur.

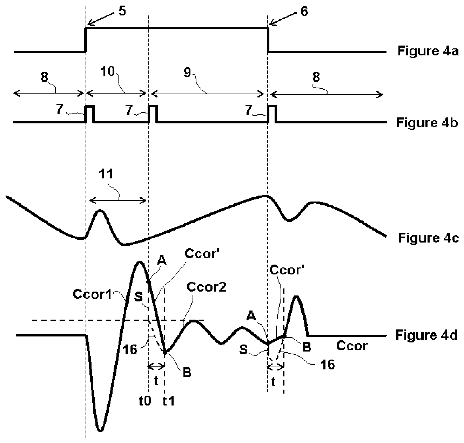

L'invention consiste à transiter progressivement le couple correctif déterminé dans le module régulateur d'agrément curatif 33 lorsqu'il y a un changement d'état de catégorie de transitoire de régime moteur et donc un changement de paramétrage du régulateur. Les figures 4a à 4d illustre une situation de vie où la catégorie de transitoire en cours varie.

On considère ici un mode de réalisation dans lequel les transitoires de régime moteur sont classés dans trois catégories de transitoires de régime prédéterminées :

- Une décélération,
- Une accélération dite « sans passage de jeux moteur », le moteur thermique ne basculant pas sur ses cales pendant une telle phase d'accélération,
- Une accélération dite « avec passage de jeux moteur », le moteur thermique basculant sur ses cales pendant une telle phase d'accélération.

La figure 4a montre une séquence identique à la figure 2a avec un poser de pied 5 suivi ultérieurement d'un lever de pied 6 de la pédale d'accélérateur.

Le transitoire de régime du moteur est scruté en permanence et est classé dans l'une des trois catégories de transitoire prédéterminées. Le module 33 détermine et applique un couple correctif Ccor (figure 4d) calibré en fonction de la catégorie de transitoire de régime prédéterminée. Autrement dit à chacune des trois catégories précitées correspond un paramétrage du module 33 régulateur d'agrément curatif pour déterminer la correction curative.

Un indicateur (figure 4b), permet d'indiquer la détection d'une occurrence d'un changement de catégorie de transitoire de régime scruté parmi les trois catégories de transitoire de régime prédéterminées. Quand la catégorie de transitoire de régime est différente de la précédente, la valeur de l'indicateur est modifiée de sorte à former un front montant 7 indiquant un changement de catégorie de transitoire de régime. Dans l'exemple, la figure 4b montre une séquence de détection de changement de catégorie de transitoire de régime identique à la figure2b. Ce changement de catégorie de transitoire entraîne un changement de procédure d'atténuation des oscillations du régime moteur.

La figure 4d montre qu'en cas de détection d'un changement de catégorie de transitoire de régime, autrement dit dans notre exemple à partir du moment où le front montant 7 de l'indicateur est détecté, par exemple entre une phase d'accélération dite avec passage de jeux 10 et une phase d'accélération sans passage de jeux 9 (figure 4b) on procède de la manière suivante :

- On arrête l'application du couple correctif, Ccor1, calibré en fonction de la catégorie de transitoire de régime précédent la détection de changement de catégorie de transitoire, ici la phase d'accélération dite avec passage de jeux 10.

- On démarre l'application du couple correctif, Ccor2, calibré cette fois en fonction de la nouvelle catégorie de transitoire de régime qui suit la détection de changement de catégorie de transitoire, ici la phase d'accélération dite sans passage de jeux 9.

Toutefois, conformément à l'invention,

- On applique, sur une durée de transition, t, déterminée, un couple correctif de transition, Ccor', évoluant de la valeur, A, correspondant à la dernière valeur du couple correctif Ccor1 appliqué à l'instant, t0, à la valeur B, correspondant à la première valeur du couple correctif, Ccor2 appliqué à l'instant, t1. La durée de transition, t, correspond à la différence entre les instants t1 et t0.

Pour faire simple, l'évolution continue et progressive du couple correctif de transition, Ccor', peut être choisie linéaire.

Sur la figure 4d le trait 16 pointillé illustre le profil du couple correctif sans la durée de transition t, c'est-à-dire avec le saut S de couple généré par le changement de paramétrage du module 33 de régulation.

En ce qui concerne la jonction entre le couple correctif de transition, Ccor', et le couple correctif, Ccor2, calibré en fonction de la nouvelle catégorie de transitoire de régime. On peut procéder en calculant, pendant la durée de transition déterminée, t, le couple correctif Ccor2, calibré en fonction de la catégorie de transitoire de régime qui suit la détection 7 de changement de catégorie de transitoire, dès l'arrêt de l'application du couple correctif, Ccor1, calibré en fonction de la catégorie de transitoire de régime précédent la détection 7 de changement de catégorie de transitoire, ici la phase d'accélération dite avec passage de jeux 10., sans l'appliquer, la durée de de transition, t, étant telle qu'à la fin de celle-ci, le couple correctif de transition, Ccor', est égal à ce couple correctif calculé, Ccor2.

Pour la mise au point, cette durée de transition, t, correspond au temps entre le changement de paramétrage et le moment où il est effectivement appliqué. Autrement dit, à t0, le calculateur demande l'application du paramétrage Ccor2, mais celui-ci n'est effectivement appliqué qu'en t1.

Cette durée de transition, t, peut être fonction du rapport, Rbv, de démultiplication engagé. En effet, quand le rapport, Rbv, de démultiplication change, la chaine cinématique change, et donc la fréquence de la correction curative n'est pas la même selon le rapport engagé. La durée de transition, t, est par exemple de 30 millisecondes, qui représente un bon compromis entre la réactivité et la prestation agrément. Cette durée de transition, t, peut être supérieure à 0 et inférieure à 100 millisecondes.
Le couple final Cf envoyé au moteur ne présente alors pas de saut de couple, ce qui n'engendre donc pas d'à coup ni d'oscillations sur le régime moteur.

La figure 4d montre également que le procédé peut s'appliquer également par exemple à partir d'une détection d'un changement de catégorie de transitoire de régime, entre la phase d'accélération sans passage de jeux 9 (figure 4b) et une phase de décélération 8.

L'invention améliore l'agrément de conduite et la prestation du véhicule lors des phases transitoires d'accélération ou de décélération pour un véhicule équipé d'un groupe motopropulseur thermique.

Les performances du module curatif ne sont pas dégradées du fait du respect de la fréquence d'oscillation de la correction.

L'invention n'induit pas de coût matériel supplémentaire.

## Revendications

1. Procédé de commande de couple d'un groupe motopropulseur comprenant un moteur thermique associé à des moyens de transmissions et un module (33) régulateur d'agrément curatif apte à compenser une oscillation de régime du moteur thermique en appliquant un couple correctif (Ccor) en opposition de phase avec l'oscillation de régime, dans lequel on :

   a) Scrute le transitoire de régime du moteur,
   b) Classe le transitoire de régime scruté dans une d'au moins deux catégories de transitoire prédéterminées,
   c) Applique un couple correctif (Ccor) calibré en fonction de la catégorie de transitoire de régime,
   d) Détecte l'occurrence d'un changement de catégorie de transitoire de régime scruté, et en cas de détection (7) d'un changement de catégorie de transitoire de régime, on :
   e) Arrête l'application du couple correctif (Ccor1) calibré en fonction de la catégorie de transitoire de régime précédant la détection de changement de catégorie de transitoire,
   f) Démarre l'application du couple correctif (Ccor2) calibré en fonction de la catégorie de transitoire de régime suivant la détection de changement de catégorie de transitoire,
   **caractérisé en ce que** l'on :
   g) Applique, sur une durée de transition (t) déterminée, un couple correctif de transition (Ccor') évoluant de la valeur (A) du couple correctif (Ccor1) à l'instant (t0) de la réalisation de l'étape e) à la valeur (B) du couple correctif (Ccor2) à l'instant (t1) de la réalisation de l'étape f), la durée de transition (t) correspondant à la différence entre ces deux instants (t0,t1).

2. Procédé selon la revendication 1, dans lequel, l'évolution du couple correctif de transition (Ccor') est linéaire.

3. Procédé selon la revendication 1 ou la revendication 2, dans lequel, les moyens de transmission comportant des rapports démultiplication, la durée de transition (t) est fonction du rapport (Rbv) de démultiplication engagé des moyens de transmission.

4. Procédé selon l'une quelconque des revendications 1 à 3, dans lequel la durée de transition (t) est supérieure à 0 et inférieure à 100 millisecondes.

5. Procédé selon la revendication 4, dans lequel que la durée de transition (t) est égale à 30 millisecondes.

6. Procédé selon l'une quelconque des revendications précédentes, dans lequel on calcule, pendant la durée de transition (t) déterminée, le couple correctif (Ccor2) calibré en fonction de la catégorie de transitoire de régime suivant la détection de changement de catégorie de transitoire, dès la réalisation de l'étape e), sans l'appliquer, et dans lequel, la durée de transition (t) est telle qu'à la fin de celle-ci, le couple correctif de transition (Ccor') est égal à ce couple correctif (Ccor2) calculé.

7. Procédé selon l'une quelconque des revendications précédentes, dans lequel le transitoire de régime est classé parmi trois catégories de transitoire prédéterminées.

8. Procédé selon la revendication précédente, dans lequel, le moteur étant posé sur des cales, les trois catégories de transitoire prédéterminées sont :

   - Une décélération,
   - Une accélération dite « sans passage de jeux moteur », le moteur ne basculant pas sur ses cales pendant une telle phase d'accélération.
   - Une accélération dite « avec passage de jeux moteur », le moteur basculant sur ses cales pendant une telle phase d'accélération.

9. Groupe motopropulseur comprenant un moteur thermique associé à des moyens de transmissions, le groupe étant **caractérisé en ce qu'**il comprend un calculateur comprenant un module (33) régulateur d'agrément curatif apte à compenser une oscillation de régime du moteur thermique en appliquant un couple correctif (Ccor) en opposition de phase avec l'oscillation de régime, le calculateur comportant de plus des moyens d'acquisition, de traitement et de commande requis à mise en oeuvre d'un procédé selon l'une quelconque des revendications précédentes.

10. Véhicule automobile, **caractérisé en ce qu'**il comprend un groupe motopropulseur selon la revendication précédente.

**Patentansprüche**

1. Verfahren zum Steuern des Drehmoments eines Antriebsstrangs, der eine Wärmekraftmaschine umfasst, die mit Mitteln zum Übertragen und einem Komfortkorrektur-Regulierungsmodul (33) assoziiert ist, das dazu bestimmt ist, eine Drehzahloszillation der Wärmekraftmaschine auszugleichen, indem ein Korrekturdrehmoment (Ccor) in Phasenopposition mit der Drehzahloszillation angelegt wird, bei dem:

   a) der Drehzahlübergang des Motors abgetastet wird,
   b) der abgetastete Drehzahlübergang in eine von mindestens zwei vorbestimmten Übergangskategorien eingestuft wird,
   c) ein Korrekturdrehmoment (Ccor) angelegt wird, das in Abhängigkeit von der Drehzahlübergangskategorie kalibriert ist,
   d) das Auftreten eines Wechsels der Übergangskategorie der abgetasteten Drehzahl erfasst wird, und im Fall des Erfassens (7) eines Wechsels der Drehzahlübergangskategorie:
   e) das Anwenden des Korrekturdrehmoments (Ccor1), das in Abhängigkeit von der Drehzahlübergangskategorie kalibriert ist, die dem Erfassen des Übergangskategoriewechsels vorangeht, gestoppt wird,
   f) das Anwenden des Korrekturdrehmoments (Ccor2), das in Abhängigkeit von der Drehzahlübergangskategorie im Anschluss an das Erfassen des Übergangskategoriewechsels kalibriert ist, zu beginnen,
   **dadurch gekennzeichnet, dass**:
   g) auf einer bestimmten Übergangsdauer (t) ein Übergangskorrekturdrehmoment (Ccor') angelegt wird, da sich von dem Wert (A) des Korrekturdrehmoments (Ccor1) im Augenblick (t0) des Ausführens des Schritts e) zu dem Wert (B) des Korrekturdrehmoments (Ccor2) im Augenblick (t1) des Ausführens des Schritts f) weiterentwickelt, wobei die Übergangsdauer (t) dem Unterschied zwischen diesen zwei Augenblicken (t0, t1) entspricht.

2. Verfahren nach Anspruch 1, bei dem das Weiterentwickeln des Übergangskorrekturdrehmoments (Ccor') linear ist.

3. Verfahren nach Anspruch 1 oder Anspruch 2, wobei, da die Übertragungsmittel Untersetzungsverhältnis umfassen, die Übergangsdauer (t) von dem eingerückten Untersetzungsverhältnis (Rbv) der Übertragungsmittel abhängt.

4. Verfahren nach einem der Ansprüche 1 bis 3, wobei die Übergangsdauer (t) größer ist als 0 und kleiner ist als 100 Millisekunden.

5. Verfahren nach Anspruch 4, wobei die Übergangsdauer (t) gleich 30 Millisekunden ist.

6. Verfahren nach einem der vorstehenden Ansprüche, bei dem während der bestimmten Übergangsdauer (t) das Korrekturdrehmoment (Ccor2), das in Abhängigkeit von der Drehzahlübergangskategorie im Anschluss an das Erfassen des Wechsels der Übergangskategorie kalibriert ist, ab dem Ausführen des Schritts e) ohne es anzuwenden, berechnet wird, und wobei die Übergangsdauer (t) derart ist, dass an ihrem Ende das Übergangskorrekturdrehmoment (Ccor') gleich diesem berechneten Korrekturdrehmoment (Ccor2) ist.

7. Verfahren nach einem der vorstehenden Ansprüche, wobei der Drehzahlübergang in drei vorbestimmte Übergangskategorien eingestuft ist.

8. Verfahren nach dem vorstehenden Anspruch, wobei, wenn der Motor auf Unterlagen aufgelegt ist, die drei vorbestimmten Übergangskategorien die folgenden sind:

   - eine Verlangsamung,
   - eine Beschleunigung, die "ohne Motorspielpassage" genannt wird, da der Motor nicht auf seinen Unterlagen während einer solchen Beschleunigungsphase kippt,
   - eine Beschleunigung, die "mit Motorspielpassage" genannt wird, da der Motor auf seinen Unterlagen während einer solchen Beschleunigungsphase kippt.

9. Antriebsstrang, der eine Wärmekraftmaschine umfasst, die mit Übertragungsmitteln assoziiert ist, Strang **dadurch gekennzeichnet, dass** er einen Rechner umfasst, der ein Komfortkorrektur-Regulierungsmodul (33) umfasst, das geeignet ist, eine Drehzahloszillation der Wärmekraftmaschine durch Anlegen eines Korrekturdrehmoments (Ccor) in Phasenopposition mit der Drehzahloszillation zu kompensieren, wobei der Rechner außerdem Erfassungs-, Verarbeitungs- und Steuermittel umfasst, die erforderlich sind, um ein Verfahren nach einem der vorstehenden Ansprüche umzusetzen.

10. Kraftfahrzeug, **dadurch gekennzeichnet, dass** es einen Antriebsstrang nach dem vorstehenden Anspruch umfasst.

**Claims**

1. A method for controlling the torque of a power train including a heat engine associated with transmission means and a corrective regulator module (33) able to compensate a speed oscillation of the heat engine by applying a corrective torque (Ccor) in phase opposition with the speed oscillation, in which:

a) the engine speed transient is examined,
b) the examined speed transient is classified in one of at least two predetermined transient categories,
c) a corrective torque (Ccor) is applied, which is calibrated as a function of the speed transient category,
d) the occurrence of a change in the examined speed transient category is detected, and in the event of detection (7) of a change in the speed transient category:
e) the application is stopped of the corrective torque (Ccor1), which is calibrated as a function of the speed transient category preceding the detection of a change in the transient category,
f) the application is started of the corrective torque (Ccor2), which is calibrated as a function of the speed transient category following the detection of a change in the transient category, **characterized in that**
g) a corrective transition torque (Ccor') is applied, over a determined transition duration (t), progressing from the value (A) of the corrective torque (Ccor1) at the time (t0) of the realisation of step e) to the value (B) of the corrective torque (Ccor2) at the time (t1) of the realisation of step f), the transition duration (t) corresponding to the difference between these two times (t0, t1).

2. The method according to Claim 1, in which the progression of the corrective transition torque (Ccor') is linear.

3. The method according to Claim 1 or Claim 2, in which, the transmission means comprising reduction ratios, the transition duration (t) is a function of the engaged reduction radio (Rbv) of the transmission means.

4. The method according to any one of Claims 1 to 3, in which the transition duration (t) is greater than 0 and less than 100 milliseconds.

5. The method according to Claim 4, in which the transition duration (t) is equal to 30 milliseconds.

6. The method according to any one of the preceding claims, in which, during the determined transition duration (t), the corrective torque (Ccor2) is calculated, which is calibrated as a function of the speed transient category following the detection of a change of transient category, as soon as step e) is realised, without applying it, and in which the transition duration (t) is such that at the end thereof, the corrective transition torque (Ccor') is equal to this calculated corrective torque (Ccor2).

7. The method according to any one of the preceding claims, in which the speed transient is classified from three predetermined transient categories.

8. The method according to the preceding claim, in which, the engine being placed on blocks, the three predetermined transient categories are:

- a deceleration,
- an acceleration designated as "without passing through engine lash", the engine not rocking on its blocks during such an acceleration phase,
- an acceleration designated as "with passing through engine lash", the engine rocking on its blocks during such an acceleration phase.

9. A power train including a heat engine associated with transmission means, the train being **characterized in that** it includes a computer including a corrective regulator module (33) able to compensate a speed oscillation of the heat engine by applying a corrective torque (Ccor) in phase opposition with the speed oscillation, the computer comprising, in addition, means for acquisition, for processing and for control required to implement a method according to any one of the preceding claims.

10. A motor vehicle, **characterized in that** it includes a power train according to the preceding claim.

**Figure 1**

**Figure 2a**

**Figure 2b**

**Figure 2c**

**Figure 2d**

Pacc

Nmot

Rbv

31

Cc

30

Cpm

32

Ci

Nmot

33

Cf

**Figure 3**

Figure 4a

Figure 4b

Figure 4c

Figure 4d

**EP 3 221 760 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014111430 A1